# EUROPEAN PATENT APPLICATION

(11) **EP 4 516 104 A1**
(43) Date of publication of application: **05.03.2025**
(21) Application number: 23193809.3
(22) Date of filing: 29.08.2023
(51) Int. Cl.: A01N 65/28, A01N 25/00, A01P 3/00

(54) **LIGHTING AND PLANT EXTRACT COMBINED APPLICATION METHOD AGAINST BOTRYTIS CINEREA IN STRAWBERRY**

(71) Applicant: Lithuanian Research Centre for Agriculture and Forestry, 54333 Kauno R. (LT)
(72) Inventor: Brazaityte, Ausra, 54333 Kauno r. (LT); Samuoliene, Giedre, 54333 Kauno r. (LT); Virsile, Akvile, 54333 Kauno r. (LT); Sutuliene, Ruta, 54333 Kauno r. (LT); Lauzike, Kristina, 54333 Kauno r. (LT); Valiuskaite, Alma, 54333 Kauno r, (LT); Rasiukeviciute, Neringa, 54333 Kauno r. (LT); Vastakaite Kairiene, Viktorija, 54333 Kauno r. (LT); Dene, Lina, 54333 Kauno r. (LT); Chrapaciene, Simona, 54333 Kauno r. (LT)
(74) Representative: Zaboliene, Reda

(57) **Abstract**

Proposed method is dedicated for but not limited to strawberry (*Fragaria x ananassa*) plant protection from *Botrytis cinerea* induced disease severity in controlled environment agriculture (CEA) systems, like cultivation chamber, plant factories, vertical farming, where plants are cultivated under artificial lighting. The essence of the method is the combined application of the violet light (V; 400 ±15 nm), turned on for 4-6 hours at the end of the photoperiod of main lighting and spraying of plant extract (PE) periodically prepared from clove (*Syzygium aromaticum* L.) bud and pimento (*Pimenta dioica* L.) fruit extracts and mixed at a ratio from 2:1 to 4:1, preferably 3:1. Combined application of violet light and plant extracts results in additivity effect (the impact of combined application surpass the sum of the individual impacts of violet light and plant extracts) and result in 90% lower disease severity, induced by *Botrytis cinerea.*

## Description

### TECHNICAL FIELD

The present invention relates to the method of a combined lighting and plant extract application for protecting strawberry plants cultivated in controlled environment systems (greenhouses, vertical farming) from *Botrytis* cinerea-induced disease by enhancing plant grey mold disease resistance.

### BACKGROUND

This invention is dedicated to sustainable plant protection from fungus-induced grey mold disease in controlled environment agricultural systems (CEA; greenhouses, vertical farming). Plant fungal diseases are a primary concern in agriculture, as they can cause significant reductions in food production. This reduction can lead to serious social and economic challenges, including food shortages, rising prices, and reduced farmers' income. Heavy losses in economically important horticultural plant yield are usually caused by the fungi of the *Botrytis* genus and mainly by *Botrytis cinerea,* which infection is also known as grey mold disease [Williamson et al., 2007, https://doi.org/10.1111/j.1364-3703.2007.00417.x]. *B. cinerea* has several life cycles, an unlimited host range, and various attack modes and can survive in unfavorable conditions [Dewey et al., 2016, DOI: 10.1007/978-3-319-23371-0_2; Hua et al., 2018, https://doi.org/10.1093/fqsafe/fyy016]. It is also a significant threat to the greenhouse, indoor farming grown plants, where disease control is challenging and expensive [Dik et al., 1999, https://doi.org/10.1023/A:1008778213278] and fungicide application possibilities are very limited. The infection of this fungi typically starts from entering the plant through natural openings, wounds, or direct penetration resulting in tissue death [Reboledo et al., 2021, https://doi.org/10.3390/jof7010011]. Additionally, the *B. cinerea* pathogen is highly aggressive due to its ability to adapt to environmental conditions or chemical fungicides used for disease prevention and control and mutate, creating new strains [Sundström et al., 2014, https://doi.org/10.1007/s12571-014-0331-y]. In addition to the acquired resistance of the pathogens, in recent years, it has become more apparent that the presence of chemical fungicide residues and accumulation of decomposition products in crops meant for human consumption or animal feed can have significant health risks and adverse effects for the environment [EFSA, 2017, https://doi.org/10.2903/j.efsa.2019.5743]. As a result, there has been a growing recognition and necessity to regulate the usage of plant protection chemical agents. Therefore, the plant protection methods using natural, plant-derived fungicides and their research-proven efficiency are of major practical and economic importance [Raveau et al., 2020, https://doi.org/10.3390/foods9030365; Soleha et al., 2022, https://doi.org/10.1007/s11676-021-01355-3], especially for CEA. CEA (high-tech greenhouses, plant factories, vertical farming, closed plant cultivation chambers) is a promising plant cultivation technology that can intensify food production in an ecologically friendly manner. It allows to solve the vulnerability of conventional farming to seasonality climate change impacts and also allows for more localized, fresh crop production and reduce food miles. Proponents of CEA vertical farming systems claim that their use will restrict the entry of pests and diseases. However, they cannot realistically be expected to entirely prevent the occurrence of pests and diseases in a crop; particularly, spores of many plant pathogenic fungi, such as grey mold (*Botrytis cinerea*)*,* are known to be dispersed by air currents [Roberts et al., 2020 https://doi.org/10.1111/aab. 125871. Therefore, alternative, natural disease control methods are of primary importance for pesticide-free CEA production.

In CEA, environmental control allows balancing cultivation parameters for high plant productivity and fitness. Artificial lighting is one of the main parameters affecting plant physiological processes, both photosynthetic productivity and plant metabolism [Murad et al., 2021 https://doi.org/10.3390/su13041985]. Previous research by inventors and other authors [Rasiukevičiu̅tė et al., https://doi.org/10.3390/iof7110970] also show that light emitting diode (LED) light influences plants and pathogens, both elevating plant resistance for pathogens, both have a direct impact on pathogenesis process. Therefore, the method disclosed by inventors integrates the light emitting diode lighting used in CEA for plant protection against the infection of one of the most important pathogens, *Botrytis cinerea,* with the application of plant extracts containing anti-fungal activity seeking for most efficient disease severity reduction.

Natural plant protection agents that have a less adverse effect on crops, such as plant extracts, showed a different level of antimicrobial efficacy to various ranges of fungal and bacterial pathogens, biodegradability, and low toxicity. Plant extracts can be applied as eco-friendly plant protection products controlling plant pathogens or as plant defense inducers [Zabka et al., 2014, https://doi.org/10.1016/j.chemosphere.2014.05.014; Zatla et al., 2017, https://doi.org/10.1080/10412905.2017.1322008; Wei et al., 2018, https://doi.org/10.1016/j.scienta.2018.06.077; Moghadam et al., 2019, https://doi.org/10.9734/jpri/2019/v26i130126].

There have been published many attempts to implement various plant extracts as antifungal agents against B. *cinerea* under *in vitro* conditions [Vitoratos et al., 2013, https://doi.org/10.15835/nbha4118931; Awad et al., 2015, 10.21608/EJCP.2015.229446; Minova et al., 2015, https://doi.org/10.1515/prolas-2015-0008; Singh et al., 2019, https://doi.org/10.31018/jans.v11i2.2053; Sernaite et al., 2020a, doi:10.3390/foods9101430; Sernaite et al., 2020b, 10.13080/z-a.2020.107.019; Sernaite et al., 2020c, doi:10.3390/plants9050613; Filippi et al., 2020, http://dx.doi.org/10.34117/bjdv6n10-316; Dene et al., 2021, https://doi.org/ 10.3390/molecules26154595]. However, only few studies proved plant extract (coriander (*Coriandrum sativum* L.)) [Wei et al., 2018, https://doi.org/10.1016/j.scienta.2018.06.077; Dene et al., 2022, https://doi.org/10.3389/fpls.2022.1098048] or essential oils' of oregano (*Origanum vulgare* L. ssp. *hirtum*), thyme (*Thymus vulgaris* L.), lemon (*Citrus limon* L.), spearmint (*Mentha spicata* L.), palmarosa (*Cymbopogon martinii* (Roxb.) Wats.), lavender (*Lavandula stoechas* L. var. *stoechas*), rosemary (*Rosmarinus officinalis* L.) fungicidal effect on *B. cinerea* under *in vivo* conditions [Mohammadi et al., 2012, https://doi.org/10.1080/03235408.2012.729422; Vitoratos et al., 2013, https://doi.org/10.15835/nbha4118931; de Oliveira Filho et al., 2022, https://doi.org/10.1016/j.ijbiomac.2022.08.049]. Meanwhile, in the patents related to agriculture, clove (*Syzygium aromaticum L*.) extract was used in the formulation against nematodes (CN102246829B), in pest control formulation (EP2763541A1, US6231865B1, US20140242199A1, AU2019208194B2, US10905114B2), biocide (WO2015113175A1), also against *Camellia oleifera Abel* diseases (CN101965848B). Clove oil was used as a herbicide ingredient (EP1603397A1), and a pesticidal agent against nematodes, fungi, insects, and termites (WO2009093079A2). There could be found patented botanical pesticides with clove oil (CN104886184A) and organic pesticide-containing oxidized clove oil (US8188004B2). Metabolites from the native Chilean plant quillay have antifungal properties against *B. cinerea* preharvest and postharvest (US20090280201A1). Volatile organic compounds are used in a method for treating, inhibiting or reducing the incidence of the development of a plant pathogenic disease, including *B. cinerea* (US8968798B2). Pimento (*Pimenta dioica* L. (Merr.)) extract is one of the components in nematicides composition (KR20090093604A), pest control composition (KR20130080667A), in plant essence composition, which has the effects of resisting oxidation, promoting metabolism and relieving nerve fatigue and has the characteristics of no stimulation and mildness (CN112168744A), in the method of antibacterial botanicals preparation (US20080003190A1). Both clove and pimento extracts were found in insect repellent patent (US20050019432A1); however, this composition comprises evening primrose oil and a carrier, with additional plant extracts, such as clove and allspice. The patented method aims to repel target pests from animals/reduce transmission of infectious diseases transmitted by target pests.

Among the fungal pathogens, grey mold (*B. cinerea*) is often reported in various greenhouse crops, including strawberry plants. The optimization of environmental factors in such cultivation areas could reduce disease damage through metabolic changes in plant cells. In this regard, light is one of the most important factors. Nowadays, environmentally friendly LED technology allows the precise manipulation of light quality and quantity and has the potential as an innovative plant disease management approach. *In vitro* investigations of *B. cinerea* showed that (near)-UV, blue, green, red, and far-red light signals by use of at least eleven potential photoreceptors initiate series responses, i.e., protection (pigmentation, enzymatic systems), morphogenesis (conidiation, apothecial development), entrainment of a circadian clock, and positive and negative tropism of multicellular (conidiophores, apothecia) and unicellular structures (conidial germ tubes) (Schumacher, 2017, https://doi.org/10.1016/j.fgb.2017.06.002, Gallé et al., 2021, https://onlinelibrary.wiley.eom/doi/full/10.1111/pce.14142). Scientific literature showed that the light spectrum could cause a series of protective events in various plants, such as polyphenols synthesis, an increase in the activity of various reactive oxygen species (ROS)-scavenging enzymes, expression of specific genes, etc. and resulting in resistance to fungal disease (Alsanius et al., 2019, https://www.mdpi.com/2311-7524/5/2/41). For example, some studies determined the antifungal effect of purple (400-410 nm) and blue (460 nm) LED lighting against *B. cinerea* in tomatoes (Imada et al., 2014, doi:10.1111/lam.12330; Xu et al., Doi: 10.1016/S2095-3119(16)61435-1; 2017; Chua et al., 2021, https://doi.org/10.1016/j.postharvbio.2020.111366). Red light (660 nm), especially twelve hours of such light followed by white light in a 16 h photoperiod efficiently increased leaf resistance to *B. cinerea* in strawberries which was related to changes in leaf metabolites, such as hydrogen peroxide, total phenolics, and hexoses (Meng et al., 2019, https://doi.org/10.1016/j.envexpbot.2018.09.025; 2020, DOI:10.1016/j.jphotobiol.2020.111988; 2023, https://doi.org/10.1007/s41348-022-00687-4). However, many such studies were conducted on detached leaves and did not reflect the effect of lighting on the pathogens under real cultivation conditions. Meanwhile, patents in this field are mainly related to developing lighting devices to control a plant disease, which has a light source capable of emitting light containing UV rays. US8299445B2 (2012), US8338801B2 (2012), and US8458954B2 (2013) describe devices that emit ultraviolet rays in a wavelength region of 255 to 340 nm combined with visible light or not and are used for controlling a plant disease such as grey mold, powdery mildew, downy mildew, anthracnose through induced the gene expression which relates to the disease damage resistance and/or filamentous fungi are subjected directly when the spore formation and hyphal growth is suppressed.

US10806096B2 (2020) invention relates to a method for stimulating the resistance of plants to biotic stress by radiation UV-C or UV-B rays alone or a combination thereof with an exposure duration being less or equal to one second and the radiation exposure being repeated at least once with an interval of time between one hour and one month. UV treatments are described as the most effective preventive measures before diseases appear or during the early stages of pathogen infestation. However, UV light can be harmful to humans, animals, and non-target organisms. Therefore, more attention is paid to inventions related to the use of visible light for controlling plant disease by increasing the production of secondary metabolites that help fend off diseases.

US20070151149A1 (2007) describes a method and apparatus for altering the level of at least one phytochemical in a plant cell or plant tissue with light of at least one wavelength selected from the range of wavelengths from 400 nm to 700 nm. Still, it does not include the effect on plant diseases. In US11541135B2, systems and methods for multiple-band visible light disinfection are disclosed in various human living environments but do not include plant cultivation. Other inventions mostly include violet (400-420 nm) light regions; however, they are dedicated to lighting devices configured to deactivate pathogens in an environment (US8398264B2 (2013), US20160375163A1 (2016), US10823369B2 (2020), US20220288253A1 (2022), US11253618B2 (2022)). US9131645B2 (2015) describes the apparatus and method of improving the growth and/or pathogen resistance of a plant using red (600-700 nm) and blue (420-480 nm) photon flux depending on their ratio and intensity; however, the effectiveness of the method was studied on Arabidopsis thaliana transgenic lines resistance against *Pseudomonas syringae.* US20100281771A1 (2010) presents a disease control method and device emitting green light, which enhances the resistance of plants such as strawberries and cucumbers against diseases caused by grey mold and anthracnose fungus.

The proposed method differs from those mentioned above by combined action of violet light and plant extracts enhancing plant antioxidant system, boron accumulation in leaves and reducing *Botrytis cinerea* induced disease severity.

### SUMMARY OF THE INVENTION

Proposed method is dedicated for but not limited to strawberry (*Fragaria* × *ananassa*) plant protection from *Botrytis cinerea* induced disease severity in controlled environment agriculture (CEA) systems, like cultivation chamber, plant factories, vertical farming, where plants are cultivated under artificial lighting. The essence of the method is the combined application of the violet light (V; 400 ±15 nm), and the effect is different from UV light (<400 nm) and blue light (>415 nm). The violet light is turned on for 4 hours when shorter (<4 h) exposure of violet light is not sufficient for the expected impact, and longer (>6 h) cannot be used not to exceed total 24 h photoperiod. At the end of the photoperiod of main lighting the plants are spraying periodically with plant extracts (PE) which are prepared from clove (*Syzygium aromaticum* L.) bud and pimento (*Pimenta dioica* L.) fruit extracts. Prepared extracts are mixed at a ratio from 2:1 to 4:1, preferably 3:1. Combined application of violet light and plant extracts results in additivity effect (the impact of combined application surpass the sum of the individual impacts of violet light and plant extracts) and result in 90% lower disease severity, induced by *Botrytis cinerea.* This impact, reducing pathogen infection can be addressed for the elevated plant antioxidant system response and higher accumulated boron contents in leaves under applied method, as boron is known for its anti-fungal activities, when applied exogenously.

### BRIEF DESCRIPTION OF DRAWINGS

Fig. 1 shows the percentage of strawberry leaf disease severity by *Botrytis cinerea* in plants treated with violet light and plant extracts.
Fig. 2 shows the comparison of the blue (B) and violet (V) light, combined with plant extract (PE) treatment, on the leaf of strawberry damaged by *Botrytis cinerea* in plants.
Fig. 3 shows the damage percentage of the violet light and plant extract treated strawberry leaves.
Fig. 4 shows principal component analysis (PCA) scatter plot (n=3 experimental repetitions.
Fig. 5 shows Boron contents in strawberry leaves, treated with violet light and plant extracts.
Fig. 6 presents the comparison of the blue (B) and violet (V) light, combined with plant extract (PE) treatment effects on the boron contents in strawberry leaves.

### DETAILED DESCRIPTION OF THE INVENTION

### Violet light application

The method is based on the light emitting diode (LED) technology, but its application is not limited to. Violet light (V; 400 ±15 nm) is applied for plant lighting at the end of the main lighting photoperiod at the photosynthetic photon flux density of 50 ± 10 µmol m⁻² s⁻¹. Violet lighting is turned on for 4 hours to extend the photoperiod of the main lighting. Main lighting is the natural solar light (in greenhouse), artificial high-pressure sodium (HPS) light or their combination, but photoperiod not less than 16 h and photosynthetic photon flux density not lower than 150 µmol m⁻² s⁻¹. Violet light application is the most efficient, when started after planting the transplants, but can be started at further plant development also. Violet light effect emerges after 10 days of application and continues through all application periods.

### Plant extract application

Plant extract for the combined application method is obtained by subcritical CO₂ extraction under 42 bar pressure, 10 °C temperature of liquid pressurized CO₂, and 16 hours of extraction time. Clove (*Syzygium aromaticum* L.) bud and pimento (*Pimenta dioica* L.) fruit extracts are prepared separately and mixed at a ratio from 2:1 to 4:1, preferably 3:1 (3 parts of clove bud extract, 1 part of pimento fruit extract). 2.5% solution of mixed plant extracts with distilled water was used for spraying strawberries, not less than 0.65 and not more than 1.3 ml of the solution per plant (amount per area should be re-calculated considering plant number per area). Plant extract effect emerges subsequent day after application and continues for 5 days. For continuous effect, strawberries have to be sprayed each 5-7 days of cultivation cycle. The application of the plant extracts can be started after strawberry transplants are rooted and can be continued at recommended dosage and period whole vegetational growth stage until fruiting.

### Combined violet light and plant extract application

The inventors have discovered that the violet light provide superior effects when combined plant extract. Surprisingly, administration violet light with plant extract on the strawberry plants synergistically reduces disease severity in strawberry leaves. This was not observed with administration violet light or plant extract alone.

According to the invention, the administration of the combination of violet light and plant on strawberry plants provides an unexpected reduction in the disease severity in strawberry plants.

Light and plant extract treatments should be applied simultaneously. Described efficiency can be attained from the 10^{th} day of violet light treatment and plant extract application should be repeated each 5-7 days of cultivation cycle until fruiting. When cancelled, combined method effect remains for approximately 5 days.

### THE EMBODIMENT EXPERIMENTS

To describe the proposed method, embodiment experiment was performed.

**Cultivation conditions:** cultivation performed in the greenhouse. Strawberry (*Fragaria* × *ananassa* Duch.) (cultivar 'Sonata') transplants were planted in the 15x15 cm plastic pots with peat substrate with NPK (100-160; 110-180; 120-200 mg L⁻¹) and microelements Mn, Cu, Mo, B, Zn, and Fe (pH 5.5-6.5; electrical conductivity (EC) ms cm⁻¹ < 1.10). The day/night temperatures of 23 ± 2/16 ± 2 °C, and 16-h photoperiod and relative air humidity of 70 ± 10% were maintained. Plants were grown under natural daylight with supplementary lighting provided by high-pressure sodium lamps (HPS) (SON-T Agro, 400 W, Philips, Eindhoven, The Netherlands) 16-h photoperiod.

*B. cinerea* isolate was taken from the collection of the Plant Protection Laboratory of the Institute of Horticulture, Lithuanian Research Centre for Agriculture and Forestry. *B. cinerea* isolate was obtained from infected strawberry (*Fragaria* × *ananassa* Duch.) (cultivar 'Elkat') fruits. *B. cinerea* mycelium was maintained by sub-culturing on potato-dextrose agar (PDA) (Liofilchem, Italy) at 22°C for 7 days. *B. cinerea* isolate was identified (Rasiukevičiu̅tė et al. 2018, DOI 10.13080/z-a.2018.105.034) as isolate 13B_E38 and belongs to group II. *B. cinerea* population is divided into two groups, which can be also determined whenever isolates are resistant or susceptible to fungicide Teldor 50 WP active ingredient fenhexamid. Group I - resistant to fenhexamid, while the group II - sensitive (Fillinger, Elad, 2016).

*Botrytis* cinerea single-spore isolate DNA was extracted with Genomic DNA extracted with purification Kit K0512 (Thermo Fisher Scientific Baltics, Lithuania) according to the manufacturer protocol. DNA was dissolved in 100 µl of 1xTE buffer or water (ultra-pure) and stored at -20 °C. 13B_E38 isolate identified with Bc108 (F 5'-ACCCGCACCTAATTCGTCAAC-3') / Bc563 (R 5'-GGGTCTTCGATACGGGAGAA-3') (Rigotti et al. 2002, https://doi.org/10.1111/j.1574-6968.2002.tb11127.x; Rlgotti et al., 2006, https://doi.org/10.14601/Phytopathol_Mediterr-1833) and C729 (*F* 5'-AGCTCGAGAGAGATCTCTGA-3') / C729 (R 5'-CTGCAATGTTCTGCGTGGAA-3') primers (Khazaeli et al. 2010, https://doi.org/10.1016/j.micres.2014.02.012).

*B. cinerea* population is divided into two groups, which can be also determined whenever isolates are resistant or susceptible to fungicide Teldor 50 WP active ingredient fenhexamid. Group I - resistant to fenhexamid, while the group II - sensitive (Fillinger, Elad, 2016). Inoculation with a 7 mm diameter mycelium disc was made on the middle leaf of strawberry trifoliate, at least 3 per plant. The disease severity index (%) was calculated after measuring the length and width of the inoculated leaf and the grey mould lesion on that leaf using a calliper.

Proposed plant protection method was used. Violet light (V) treatment was started, when transplants rooted and on the 10-th day of the lighting, plant extracts (PE) were sprayed. Untreated plants (HPS), served as control and violet light (HPS+V), plant extract (HPS+PE), and their combined impact (HPS+V+PE) was demonstrated.

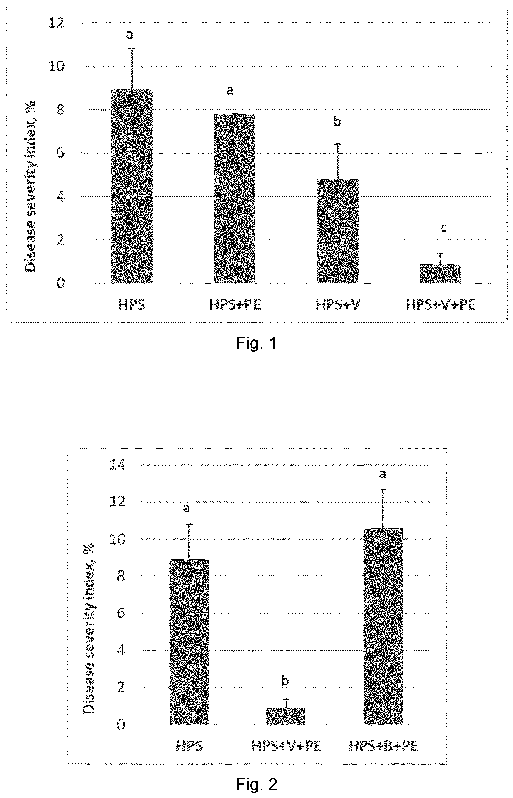

**The results** of embodiment experiments confirm the efficiency of the combined application of the violet light and plant extract. In Figure 1, it is shown that plant extract alone (HPS+PE) has only a statistically insignificant impact on the percentage of strawberry leaf damage by *Botrytis cinerea* 4 days after inoculation. Violet light LED light (HPS+V) alone reduced the disease severity index by 46%, compared to HPS. However, the combined application of violet light and plant extracts (HPS+V+PE) resulted in 90% lower disease severity in strawberries, compared to untreated plants (HPS) and 81% lower, compared to violet light treatment (HPS+V).

**Figure 1****.** The percentage of grey mold induced disease severity index in strawberry leaves 4 days post-inoculation in plants treated with violet light and plant extracts. HPS - Control; Strawberry plants, illuminated with background natural and artificial high-pressure sodium lamps (HPS) in the greenhouse; HPS+PE - control plants, treated with plant extract (PE); HPS+V - control plants, treated with violet (V) 400 nm light; HPS+V+PE - control plants after combined treatment of violet light (V) and plant extracts (PE). Different letters above error bars indicate statistically significant differences between means of treatments according to ANOVA's Tukey's test when p<0.05.

This combined impact is specific for violet light (400 nm), as Figure 2 confirms, that blue light, 455 nm, does not provide a similar impact on Botrytis cinerea-induced disease severity reduction.

**Figure 2****.** The comparison of the blue (B) and violet (V) light, combined with plant extract (PE) treatment, effects on the *Botrytis* cinerea-induced disease severity index in strawberry plants, 4 days post-inoculation. HPS - Control; Strawberry plants, illuminated with background natural and artificial high-pressure sodium lamps (HPS) in the greenhouse; HPS+V+PE - control plants after combined treatment of violet 400 nm light (B) and plant extracts (PE); HPS+B+PE - control plants after combined treatment of blue 455 nm light (B) and plant extracts (PE). Different letters above error bars indicate statistically significant differences between means of treatments according to ANOVA's Tukey's test when p<0.05.

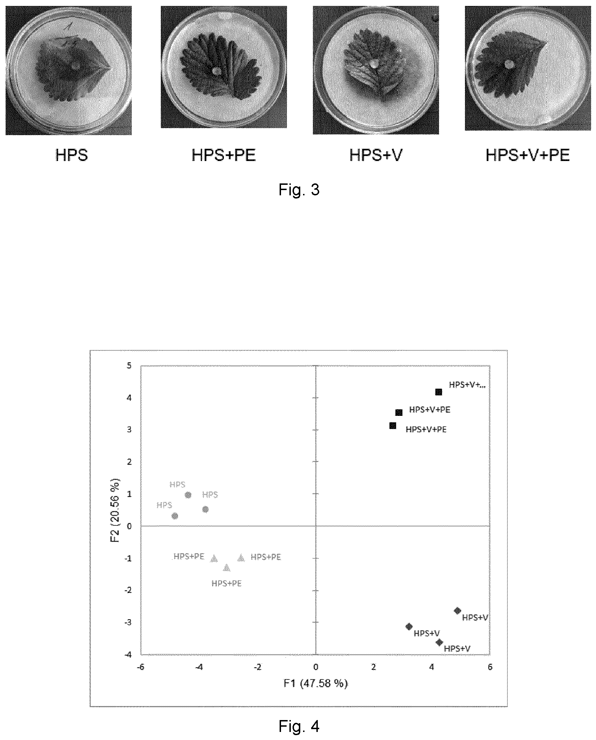

**Figure 3****.** Susceptibility to *B.Cinerea* of the violet light and plant extract treated strawberry leaves, 5 days after treatment and reinoculation with *Botrytis cinerea* on healthy leaves. HPS - Control; Strawberry plants, illuminated with background natural and artificial high-pressure sodium lamps (HPS) in the greenhouse; HPS+PE - control plants, treated with plant extract (PE); HPS+V - control plants, treated with violet (V) 400 nm light; HPS+V+PE - control plants after combined treatment of violet light (V) and plant extracts (PE).

Figure 3 confirms the durability of the combined violet light and plant extract impact on *Botrytis cinerea-induced* disease development even after termination of active treatment. Leaves, detached from the plants after 10 days of light and plant extract treatment from healthy plants, were reinoculated with *B.cinerea* in vitro and incubated for 5 days. The pictures show the significant impact of violet light on disease severity index and the even more pronounced impact of combined light plant extract HPS+PE treatment.

Together with disease severity index, numerous plant physiological parameters, indicating plant physiological state, including antioxidant system response, leaf pigment and mineral element, soluble sugar contents, were measured.

**Figure 4****.** Principal component analysis (PCA) scatter plot (n=3 experimental repetitions). PCA factor loadings of measured physiological indices in strawberry plants treated with violet light and plant extracts are presented in table 1. HPS - Control; Strawberry plants, illuminated with background natural and artificial high-pressure sodium lamps (HPS) in the greenhouse; HPS+PE - control plants, treated with plant extract (PE); HPS+V - control plants, treated with violet (V) 400 nm light; No synergy was observed. HPS+V+PE - control plants after combined treatment of violet light (V) and plant extracts (PE). Principal component analysis in Figure 4 and Table 1 confirms that light and plants extract treatments have specific impacts not only on disease-affected leaf area but also on the measured strawberry physiological parameters. HPS and HPS+PE (plant extract treatment) have only a slight impact on measured plant parameters, while violet light (HPS+V) and combined (HPS+V+PE) application significantly differs from control HPS according to the F1 component.

This shift, according to factor loadings can be strongly attributed to disease severity and chlorophyll indices, antioxidant system response (DPPH, ABTS free radical activities, total phenolic contents in leaf and enzyme antioxidant glutathione reductase (GR) activity), soluble sugar concentration, and main mineral element, P, S, B, Ca, Mn increased contents (Table 1). HPS+V and combined HPS+V+PE treatments also significantly differ in between according to F2 component. Factor loadings indicate that this distribution significantly impacts strawberry antioxidant response through ferric reduction antioxidant power (FRAP), enzyme antioxidant superoxide dismutase (SOD), and total protein contents.

**Table 1. Factor loadings for the principal component analysis (PCA), resented in Figure 4.**

| **Measured indices** | **F1** | **F2** |
|---|---|---|
| Disease severity, 4 DPI | -0.754 | -0.391 |
| Disease severity, 7 DPI | -0.919 | 0.168 |
| Damage rate, % per day | -0.763 | 0.523 |
| Dry matter, % | -0.559 | -0.118 |
| Chi | 0.650 | 0.212 |
| Fla | 0.463 | 0.668 |
| NBI | -0.146 | -0.668 |
| DPPH | -0.640 | 0.706 |
| ABTS | 0.950 | -0.103 |
| FRAP | 0.059 | 0.837 |
| TPC | 0.784 | 0.254 |
| Total protein | -0.102 | 0.938 |
| SOD | 0.409 | -0.837 |
| GR | 0.831 | -0.424 |
| Fructose | -0.822 | -0.272 |
| Glucose | -0.788 | -0.308 |
| Sucrose | -0.228 | -0.527 |
| Maltose | -0.877 | -0.069 |
| P | 0.986 | 0.029 |
| S | 0.946 | 0.013 |
| B | 0.820 | 0.528 |
| Ca | 0.958 | 0.029 |
| Cu | -0.871 | -0.169 |
| Fe | 0.562 | -0.359 |
| K | 0.573 | 0.022 |
| Mg | 0.607 | -0.261 |
| Mn | 0.881 | 0.318 |
| Na | -0.440 | 0.400 |
| Zn | 0.257 | -0.511 |
| Mo | -0.362 | 0.500 |

DPI - days post inoculation, Chl - Chlorophyll index, Fla - Flavonoid index, NBI - nitrogen balance index, DPPH - 2-diphenyl-1-picrylhydrazyl free radical scavenging activity, ABTS - 2,2'-azino-bis-(3-ethylbenzothiazoline-6-sulfonic) acid free radical scavenging activity, FRAP - Ferric reduction antioxidant power, TPC - Total phenolic content, SOD - Superoxide dismutase activity; GR - Glutathione reductase activity, P - phosphorus, S - sulphur, B - Boron, Ca - calcium, Cu - copper, Fe - iron, K - kalium, Mg - magnesium, Mn - manganese, Na - sodium, Zn - zinc, Mo - molybdenum.

Correlation analysis of all measured disease severity and plant physiological parameters in Table 2 show that disease severity percentage 4 days after inoculation (4 DPI), strongly correlates (R=0.75) with further disease development, indicating the durability of the impact of the proposed plant protection method. A strong negative correlation between disease severity and the ABTS free radical activity (R=-0.71) and total phenolic contents (TPC; R=-0.72) in leaves disclose the disease development reduction due to the higher antioxidant state in strawberry leaves. Higher contents of soluble sugars positively correlate with higher disease severity index. However, a negative correlation between disease severity percentage (R=-0.68 - -0.77) and mineral element contents (P, S, Ca, Cu, Mn) show their role in plant disease resistance. A very strong correlation (R=-0.82) Between leaf Boron (B) and B.cinerea-induced strawberry disease severity discloses its role in disease protection mechanism, as previously was shown, that exogenously applied boron has a positive impact on Botrytis-induced disease development [Du et al., 2023 https://doi.ora/10.1002/ps.7451].

**Table 2. Correlation analysis of all measured disease severity and plant physiological parameters**

| Variables | Disease severity, 4 DPI | Disease severity, 7 DPI | Damage rate, % per day |
|---|---|---|---|
| Disease severity, 4 DPI | **1** | **0.754** | 0.349 |
| Disease severity, 7 DPI | **0.754** | **1** | **0.879** |
| Damage rate, % per day | 0.349 | **0.879** | **1** |
| Dry matter, % | 0.372 | 0.297 | 0.153 |
| Chl | -0.406 | -0.484 | -0.395 |
| Fla | -0.525 | -0.386 | -0.170 |
| NBI | 0.352 | 0.172 | -0.010 |
| DPPH | 0.132 | **0.644** | **0.823** |
| ABTS | **-0.714** | **-0.966** | **-0.859** |
| FRAP | -0.477 | -0.051 | 0.273 |
| TPC | **-0.721** | **-0.812** | **-0.635** |
| Total protein | -0.155 | 0.284 | 0.517 |
| SOD | -0.080 | **-0.631** | **-0.841** |
| GR | -0.423 | **-0.784** | **-0.811** |
| Fructose | **0.718** | **0.673** | 0.438 |
| Glucose | **0.719** | **0.635** | 0.383 |
| Sucrose | 0.497 | 0.057 | -0.279 |
| Maltose | **0.737** | **0.809** | **0.619** |
| P | **-0.737** | **-0.880** | **-0.720** |
| S | **-0.714** | **-0.888** | **-0.748** |
| B | **-0.815** | **-0.644** | -0.327 |
| Ca | **-0.707** | **-0.882** | **-0.745** |
| Cu | **0.684** | **0.747** | 0.568 |
| Fe | -0.263 | **-0.675** | **-0.771** |
| K | -0.361 | -0.308 | -0.177 |
| Mg | -0.255 | -0.382 | -0.360 |
| Mn | **-0.771** | **-0.674** | -0.402 |
| Na | 0.142 | 0.343 | 0.387 |
| Zn | -0.046 | -0.480 | **-0.651** |
| Mo | 0.082 | 0.548 | **0.722** |

The correlation matrix (Pearson correlation coefficient) of measured physiological indices in violet light and plant extract-treated strawberry leaves. Values in bold are significantly different from 0, when p<0.05.

DPI - days post inoculation, Chl - Chlorophyll index, Fla - Flavonoid index, NBI - nitrogen balance index, DPPH - 2-diphenyl-1-picrylhydrazyl free radical scavenging activity, ABTS - 2,2'-azino-bis-(3-ethylbenzothiazoline-6-sulfonic) acid free radical scavenging activity, FRAP - Ferric reduction antioxidant power, TPC - Total phenolic content, SOD - Superoxide dismutase activity; GR - Glutathione reductase activity, P - phosphorus, S - sulfur, B - Boron, Ca - calcium, Cu - copper, Fe - iron, K - kalium, Mg - magnesium, Mn - manganese, Na - sodium, Zn - zinc, Mo - molybdenum.

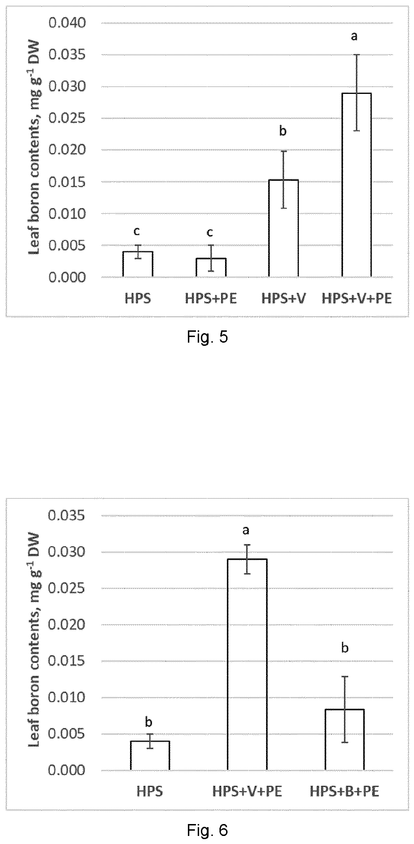

Figure 5 presents Boron contents in strawberry leaves, treated with violet light and plant extract. HPS - Control; Strawberry plants, illuminated with background natural and artificial high-pressure sodium lamps (HPS) in the greenhouse; HPS+PE - control plants, treated with plant extract (PE); HPS+V - control plants, treated with violet (V) 400 nm light; HPS+V+PE - control plants after combined treatment of violet light (V) and plant extracts (PE). Different letters above error bars indicate statistically significant differences between means of treatments according to ANOVA's Tukey's test when p<0.05.

There is no significant impact on leaf boron content by plant extract application alone (HPS+PE) compared to control HPS. Violet light (HPS+V) resulted in 3.8 times higher leaf boron contents, while complex application HPS+V+PE resulted in an additivity effect and leaf boron content was determined 7.3 times higher, compared to HPS and 1.9 times higher compared to sole violet light (HPS+V) application.

Figure 6 presents the comparison of the blue (B) and violet (V) light, combined with plant extract (PE) treatment effects on the boron contents in strawberry leaves.

HPS - Control; Strawberry plants, illuminated with background natural and artificial high-pressure sodium lamps (HPS) in the greenhouse; HPS+V+PE - control plants after combined treatment of violet 400 nm light (B) and plant extracts (PE); HPS+B+PE - control plants after combined treatment of blue 455 nm light (B) and plant extracts (PE). Different letters above error bars indicate statistically significant differences between means of treatments according to ANOVA's Tukey's test when p<0.05. Data in Figure 6 display the specificity of the combined application of violet light and plant extract treatment, as blue light (HPS+B+PE), although it has a close wavelength, does not have an impact, different from control HPS.

In summary, the embodiment experiment discloses the efficiency of proposed method of plant protection against *Botrytis cinerea* induced disease severity. Proposed method reduces disease severity index by 90%, compared to untreated plants. Combined application of violet light and plant extracts results in additivity effect when the combined impact of violet light and plant extracts surpass the sum of the individual impacts of violet light and plant extracts. The effects of violet light (400 nm) are significantly different from blue light impact (455 nm).

## Claims

1. A method for treating, inhibiting or reducing the incidence of the development of a plant pathogenic disease severity, wherein said method comprises applying the combination of the light and plant extract to the strawberry plants, wherein the strawberry plants are exposed to the light; wherein plant extract applied to the strawberry plants is a mixture of clove (*Syzygium aromaticum L.*) bud and pimento (*Pimenta dioica L.*) fruit subcritical CO₂ extracts.

2. The method for treating, inhibiting or reducing the incidence of the development of a plant pathogenic disease according to claim 1, wherein the pathogenic disease is the leaf damaged by *Botrytis cinerea* in strawberry plants.

3. The method for treating, inhibiting or reducing the incidence of the development of a plant pathogenic disease according claim 1 or 2, wherein the lighting comprises the photoperiod of the main lighting and the violet lighting.

4. The method for treating, inhibiting or reducing the incidence of the development of a plant pathogenic disease according to any of claims 1-3, wherein the main lighting is the natural solar light, artificial high pressure sodium light or their combination.

5. The method for treating, inhibiting or reducing the incidence of the development of a plant pathogenic disease according to any of claims 1-4, wherein the strawberry plants are exposed to violet light having a peak wavelength from 400 nm to 415 nm.

6. The method for treating, inhibiting or reducing the incidence of the development of a plant pathogenic disease according to any of claims 1-5, wherein the strawberry plant is exposed to violet light after 14-18 h photoperiod of the main light.

7. The method for treating, inhibiting or reducing the incidence of the development of a plant pathogenic disease according to any of claims 1-6, wherein the strawberry plant is exposed to violet light for 4 to 6 hours.

8. A method for treating, inhibiting or reducing the incidence of the development of a plant pathogenic disease to any of claims 1-7, wherein the light and plant extracts are applied simultaneously.

9. The method for treating, inhibiting or reducing the incidence of the development of a plant pathogenic disease according to any of claims 1-8, wherein plant extract is prepared from clove (*Syzygium aromaticum L*.) bud and pimento (*Pimenta dioica L.*) fruit extracts and mixed at a ratio from 2:1 to 4:1, preferably 3:1.

10. The method for treating, inhibiting, or reducing the incidence of a plant pathogenic disease severity according to any of claims 1-9, said method comprising exposing or contacting the strawberry plants to controlled environment agriculture systems, selected from cultivation chambers, plant factories, vertical farming.
